(19) **Europäisches Patentamt / European Patent Office / Office européen des brevets**

(11) **EP 4 382 951 A1**

(12) # EUROPEAN PATENT APPLICATION

(43) Date of publication:
**12.06.2024 Bulletin 2024/24**

(21) Application number: **22212149.3**

(22) Date of filing: **08.12.2022**

(51) International Patent Classification (IPC):
*G01S 7/02* (2006.01)   *G01S 7/00* (2006.01)
*G01S 13/00* (2006.01)   *H04W 28/00* (2009.01)
*H04L 5/00* (2006.01)   *G01S 13/28* (2006.01)
*G01S 7/292* (2006.01)

(52) Cooperative Patent Classification (CPC):
**G01S 7/0232; G01S 7/003; G01S 7/0235;
G01S 13/003; H04W 40/244;** G01S 7/006;
G01S 7/2883; G01S 7/2928; G01S 13/284

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Imec VZW
3001 Leuven (BE)**

• **Katholieke Universiteit Leuven
3000 Leuven (BE)**

(72) Inventors:
• **Sakhnini, Adham
3001 Heverlee (BE)**
• **Bourdoux, Andre
4910 Theux (BE)**

(74) Representative: **Körfer, Thomas
Mitscherlich PartmbB
Patent- und Rechtsanwälte
Karlstraße 7
80333 München (DE)**

(54) **SYSTEM AND METHOD FOR JOINT COMMUNICATION AND RADAR SENSING**

(57)     A system (100) is provided for joint communication and radar sensing. The system (100) comprises at least one communication transmitter unit (101) configured to transmit at least one communication pilot signal (102), at least one radar transmitter unit (103) configured to transmit at least one radar pilot signal (104), a control unit (107) configured to schedule the transmission of the at least one communication transmitter unit (101) and/or the at least one radar transmitter unit (103) by means of a time delay, and at least one receiver unit (109) configured to receive the at least one radar pilot signal (104) with the time delay with respect to the at least one communication pilot signal (102).

Fig. 1

EP 4 382 951 A1

## Description

The invention relates to pilot signal based joint communication and radar sensing, especially to the scheduling and/or timing control for uplink pilot-based joint communication and radar sensing.

Integrated radar sensing is an expected feature in future wireless communication standards. The integration may seek to exploit the environmental awareness to improve spectrum utilization and may enable new services, such as environmental sensing and surveillance, especially without deploying any new hardware.

For example, WO 2022/188979 A1 discloses a radar sensing function in a mobile communication device. Therein, information about a path delay between the mobile communication device and a receiver may be used as one of the bases to determine a timing of a radar operation window, especially allocated at the guard period between uplink and downlink transmissions. However, a high precision may be required to retain the radar operation window in order to maintain the communication performance, thereby raising complexities.

Accordingly, an object of the invention is to provide a system and a method for joint communication and radar sensing to facilitate a low-complexity and cost-effective integration of radar functionalities into wireless communication systems, especially without compromising the communication performance.

The object is solved by the features of the first independent claim for the system and by the features of the second independent claim for the method. The dependent claims contain further developments.

According to a first aspect of the invention, a system is provided for joint communication and radar sensing. The system comprises at least one communication transmitter unit configured to transmit at least one communication pilot signal, at least one radar transmitter unit configured to transmit at least one radar pilot signal, a control unit configured to schedule the transmission of the at least one communication transmitter unit and/or the at least one radar transmitter unit by means of a time delay, and at least one receiver unit configured to receive the at least one radar pilot signal with the time delay with respect to the at least one communication pilot signal.

In other words, the at least one receiver unit may receive the at least one communication pilot signal and the at least one radar pilot signal and/or one or more multipath components of the at least one radar pilot signal, whereby the at least one radar pilot signal may comprise the time delay with respect to the at least one communication pilot signal, and a corresponding time shift in the one or more multipath components of the at least one radar pilot signal, especially at the at least one receiver unit.

For example, during the uplink transmission, the at least one radar transmitter unit may transmit the at least one radar pilot signal after the time delay, especially assigned by the control unit, with respect to the transmission of the at least one communication pilot signal by the at least one communication transmitter unit. Accordingly, the at least one receiver unit may first receive the at least one communication pilot signal and, after the time delay, may receive the at least one radar pilot signal and/or the one or more multipath components of the at least one radar pilot signal.

Preferably, the time delay may be generated such that the transmitted signals, especially the transmitted symbols, from the at least one radar transmitter unit and the at least one communication transmitter unit may significantly or entirely overlap at the at least one receiver unit.

Preferably, the control unit is further configured to generate a frequency shift for the at least one communication transmitter unit and/or the at least one radar transmitter unit. In this regard, the at least one receiver unit is further configured to receive the at least one radar pilot signal with the frequency shift with respect to the at least one communication pilot signal.

In other words, the at least one receiver unit may receive the at least one communication pilot signal and the at least one radar pilot signal and/or one or more multipath components of the at least one radar pilot signal, whereby the at least one radar pilot signal and/or the one or more multipath components of the at least one radar pilot signal may comprise the frequency shift with respect to the at least one communication pilot signal, especially at the at least one receiver unit.

For example, during the uplink transmission, the at least one communication transmitter unit and the at least one radar transmitter unit may simultaneously transmit the at least one communication pilot signal and the at least one radar pilot signal, respectively. Furthermore, the at least one radar transmitter unit may transmit the at least one radar pilot signal with the frequency shift, especially assigned by the control unit, with respect to the at least one communication pilot signal.

Accordingly, the at least one receiver unit may simultaneously receive the at least one communication pilot signal and the at least one radar pilot signal and/or the one or more multipath components of the at least one radar pilot signal, where the at least one radar pilot signal and/or the one or more multipath components of the at least one radar pilot signal may comprise the frequency shift with respect to the at least one communication pilot signal.

Preferably, the frequency shift may be generated such that the resulting frequency shift is only a small fraction of the bandwidth, e.g., less than 1%.

Preferably, the control unit is configured to transmit the time delay and/or the frequency shift to the at least one receiver unit prior to the reception of the at least one communication pilot signal and the at least one radar pilot signal. In this regard, the at least one receiver unit is configured to perform channel estimation based on the time delay and/or the frequency shift in order to separate communication and radar sensing channels.

Advantageously, the control unit may schedule the transmissions by scheduling the at least one communication transmitter unit and the at least one radar transmitter unit over time such that the separation of the radar and communication pilot signals, i.e., the separation of the radar and communication channels, can be established at the at least one receiver unit, especially by means of range-domain orthogonality at the at least one receiver unit.

Additionally or alternatively, the control unit may configure the transmissions by generating frequency shifts between the at least one communication pilot signal and the at least one radar pilot signal such that the separation of the radar and communication pilot signals, i.e., the separation of the radar and communication channels, can be established at the at least one receiver unit, especially by means of Doppler-domain orthogonality at the at least one receiver unit.

Preferably, the control unit is configured to generate the time delay by means of a digital pilot modulation. For instance, the control unit may generate the time delay in the frequency domain. Alternatively, the control unit is configured to generate the time delay by one or more time delay units. In other words, the control unit may generate the time delay in the time domain.

Preferably, the control unit is configured to generate the frequency shift by means of a digital pilot modulation. For instance, the control unit may generate the frequency shift in the frequency domain. Alternatively, the control unit is configured to generate the frequency shift by one or more frequency offsets. In other words, the control unit may generate the frequency shift in the time domain.

Preferably, the at least one communication pilot signal and/or the at least one radar pilot signal correspond to a waveform with a prefix, preferably a cyclic prefix. Furthermore, the control unit is configured to generate the time delay corresponding to a predefined time range within the waveform prefix.

In this regard, the at least one receiver unit is configured to perform the channel estimation in range-domain based on the time delay. Additionally or alternatively, the at least one receiver unit is configured to perform the channel estimation in Doppler-domain based on the frequency shift. For instance, the at least one receiver unit may generate range profiles as channel taps from the received signals, and may derive a range-axis of the range profiles based on the time delay, especially based on the predefined time range within the waveform prefix.

Advantageously, the control unit may schedule the transmissions by scheduling the at least one communication transmitter unit and the at least one radar transmitter unit in different timeslots within the prefix of the transmitted waveform such that the separation of the radar and communication pilot signals, i.e., the separation of the radar and communication channels, can be established by means of range-domain orthogonality at the at least one receiver unit.

Additionally or alternatively, the at least one receiver may derive the Doppler bins based on the frequency shift. As such, the at least one receiver unit may perform range-domain channel separation and/or Doppler-domain channel separation. In this regard, especially due to the scheduling, the channel taps may be at different delay and/or Doppler bins, and the at least one receiver unit may use the time delay and/or frequency shift information in order to separate the channels in the range-domain and/or in the Doppler domain.

According to a second aspect of the invention, a method is provided for joint communication and radar sensing. The method comprises the steps of transmitting at least one communication pilot signal by at least one communication transmitter unit, transmitting at least one radar pilot signal by at least one radar transmitter unit, scheduling, by a control unit, the transmission of the at least one communication transmitter unit and/or the at least one radar transmitter unit by means of a time delay, and receiving the at least one radar pilot signal with the time delay with respect to the at least one communication pilot signal by at least one receiver unit.

In other words, the at least one receiver unit may receive the at least one communication pilot signal and the at least one radar pilot signal and/or one or more multipath components of the at least one radar pilot signal, whereby the control unit may schedule the transmission of the at least one communication transmitter unit and/or the at least one radar transmitter unit by means of the time delay such that the at least one radar pilot signal may comprise the time delay with respect to the at least one communication pilot signal, and a corresponding time shift in the one or more multipath components of the at least one radar pilot signal, especially at the at least one receiver unit.

Preferably, the method further comprises the steps of generating, by the control unit, a frequency shift for the at least one communication transmitter unit and/or the at least one radar transmitter unit, and receiving the at least one radar pilot signal with the frequency shift with respect to the at least one communication pilot signal by the at least one receiver unit.

In other words, the at least one receiver unit may receive the at least one communication pilot signal and the at least one radar pilot signal and/or one or more multipath components of the at least one radar pilot signal, whereby the control unit may generate the frequency shift for the at least one communication transmitter unit and/or the at least one radar transmitter unit such that the at least one radar pilot signal and/or the one or more multipath components of the at least one radar pilot signal may comprise the frequency shift with respect to the at least one communication pilot signal, especially at the at least one receiver unit.

Preferably, the method further comprises the steps of transmitting the time delay and/or the frequency shift by the control unit to the at least one receiver unit prior to the reception of the at least one communication pilot signal and the at least one radar pilot signal, and performing channel estimation by the at least one receiver unit based on the time delay and/or the frequency shift in order to separate communication and radar sensing channels.

Preferably, the method further comprises the step of generating the time delay by the control unit using a digital pilot modulation. Alternatively, the method comprises the step of generating the time delay by the control unit using one or more time delay units.

Preferably, the method further comprises the step of generating the frequency shift by the control unit using a digital pilot modulation. Alternatively, the method comprises the step of generating the frequency shift by the control unit using one or more frequency offsets.

Preferably, the method further comprises the steps of providing a waveform with a prefix, preferably a cyclic prefix, as the at least one communication pilot signal and/or the at least one radar pilot signal, and generating the time delay by the control unit corresponding to a predefined time range within the waveform prefix.

Preferably, the method further comprises the step of performing channel estimation in range-domain by the at least one receiver unit based on the time delay. Additionally or alternatively, the method further comprises the step of performing channel estimation in Doppler-domain by the at least one receiver unit based on the frequency shift.

It is to be noted that the method according to the second aspect corresponds to the system according to the first aspect and its implementation forms. Accordingly, the method according to the second aspect achieves the same advantages and effects as the system of the first aspect and its respective implementation forms.

Exemplary embodiments of the invention are now further explained with respect to the drawings by way of example only, and not for limitation. In the drawings:

Fig. 1 shows an exemplary embodiment of the system according to the first aspect of the invention;

Fig. 2 shows a time-frequency layout of an exemplary OFDM system;

Fig. 3 shows an exemplary received channel estimation scheme by de-spreading pilot sequences;

Fig. 4 shows an exemplary range-Doppler processing from the channel estimation of Fig. 3;

Fig. 5 shows an exemplary scenario for the joint communication and radar sensing;

Fig. 6A shows an exemplary range-profile corresponding to the scenario of Fig. 5;

Fig. 6B shows an exemplary range-Doppler map corresponding to the range-profile of Fig. 6A;

Fig. 7 shows exemplary OFDM symbols with a cyclic prefix with the timing reference from the receiver point of view;

Fig. 8A shows an exemplary range-profile corresponding to Fig. 7;

Fig. 8B shows an exemplary ranged-Doppler map corresponding to the range-profile of Fig. 8A; and

Fig. 9 shows an exemplary embodiment of the method according to the second aspect of the invention.

Reference will now be made in detail to the embodiments of the present invention, examples of which are illustrated in the accompanying drawings. However, the following embodiments of the present invention may be variously modified and the range of the present invention is not limited by the following embodiments. Reference signs for similar entities in different embodiments are partially omitted.

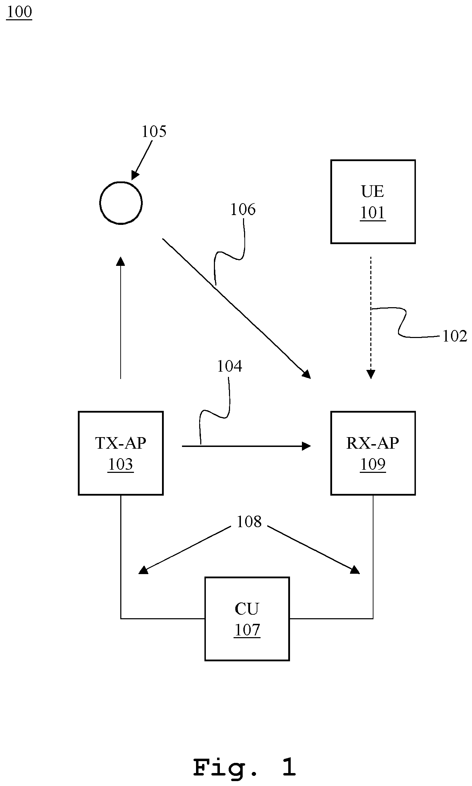

In Fig. 1, an exemplary embodiment of the system 100 according to the first aspect of the invention is illustrated. The system 100 may comprise a communication transmitter unit, hereinafter referred as user equipment, UE 101, a radar transmitter unit, hereinafter referred as transmitter access point, Tx-AP 103, a receiver unit, hereinafter referred as receiver access point, RX-AP 109, and a control unit, hereinafter referred as scheduler 107.

The system 100 may correspond to a multiple-input-multiple-output (MIMO) communication or antenna system comprising the TX-AP 103 and the RX-AP 109 with the scheduler 107, whereby the scheduler 107 may be integrated into a central processing unit (not shown) of the MIMO system. The system 100 may serve the UE 101 with a data service. Alternatively, the UE 101 may correspond to a further TX-AP or the TX-AP 103, which may be served with the data service.

One or more reflectors and/or scatters, such as a reflector 105, hereinafter referred as interacting object, IO, may be present in the vicinity of the UE 101 and/or the TX-AP 103, and may result in the multipath components. Accordingly, the system 100 may serve the UE 101 with the data service and at the same time may localize the IO 105.

The system 100, especially the MIMO system, may operate in a time-division duplex (TDD) mode, which may comprise a channel estimation segment, an uplink payload segment, and a downlink payload segment. The system 100, especially the MIMO system, may be a cellular system, a distributed MIMO system or a cell-free system. The Tx-AP 103 and the RX-AP 109 may be collocated or widely distributed.

In the following examples, only the uplink is considered, and the description is focused on the pilot-based channel estimation or training segment of the TDD frame. The system 100 may operate by allocating a subset of the antennas for transmission and a subset of the antennas for reception. In particular, the UE 101 and the TX-AP 103 may be allocated a set of pilot sequences and may be coordinated to transmit their pilots.

For example, the UE 101 may transmit a communication pilot signal 102 and the TX-AP 103 may transmit a radar pilot signal 104. The scheduler 107 may schedule the transmission of the UE 101 and/or the TX-AP 103 by means of a time delay. Additionally, the IO 105 may cause the multipath component 106 of the radar pilot signal 104.

The RX-AP 109 may receive the communication pilot signal 102, the radar pilot signal 104 and the multipath component 106, where at the RX-AP 109, the radar pilot signal 104 and/or the multipath component 106 may be received with the time delay with respect to the reception of the communication pilot signal 102. The received signals may therefore significantly or entirely overlap at the RX-AP 109. The time delay may be generated such that the resulting delay spread of the radio propagation channel is very small compared to the duration of the signal waveform. For example, a time delay of 0.5 $\mu$s may be defined for a waveform having a duration of 50 $\mu$s.

Additionally or alternatively, the scheduler 107 may generate a frequency shift for the UE 101 and/or for the TX-AP 103, and the UE 101 and the TX-AP 103 may simultaneously transmit the communication pilot signal 102 and the radar pilot signal 104, respectively. Additionally, the IO 105 may cause the multipath component 106 of the radar pilot signal 104.

The RX-AP 109 may simultaneously receive the communication pilot signal 102, the radar pilot signal 104 and the multipath component 106, where at the RX-AP 109, the radar pilot signal 104 and/or the multipath component 106 may comprise the frequency shift with respect to the reception of the communication pilot signal 102.

In this regard, the scheduler 107 may transmit information regarding the time delay and/or the frequency shift to the RX-AP 109 prior to the reception of the signals 102, 104, 106. As the RX-AP 109 may receive a mixture of UE 101 signals and TX-AP 103 signals, the RX-AP 109 may perform channel estimation based on the received information regarding the time delay and/or the frequency shift, especially by producing a set of UE channel estimates and TX-AP channel estimates, in order to separate the communication and radar sensing channels. The procedure will be described in a later section of this disclosure.

With respect to the time delay, the scheduler 107 may generate and/or may configure the UE 101 and/or the TX-AP 103 to generate said time delay by means of a digital pilot modulation, e.g., by means of phase ramps, and therefore, the received signals may entirely overlap at the RX-AP 109. Alternatively, the scheduler 107 may generate and/or may configure the UE 101 and/or the TX-AP 103 to generate said time delay by means of one or more delay units, e.g., analog and/or physical and/or digital time delay units, such that the received signals may significantly overlap at the RX-AP 109.

For example, an OFDM waveform with 15 kHz subcarrier spacing may correspond to a symbol duration of about 67 $\mu$s, while a 100 meter delay spread of the radio propagation channel may correspond to 0.33 $\mu$s in time. This may result in an overlap of (1 - 0.33 / 67) = 99.5%. Similarly, for the same delay spread, an OFDM waveform with 30 kHz subcarrier spacing may result in an overlap of 99%, and an OFDM waveform with 60 kHz subcarrier spacing may result in an overlap of 98%.

With respect to the frequency shift, the scheduler 107 may generate and/or may configure the UE 101 and/or the TX-AP 103 to generate said frequency shift by means of a digital pilot modulation, e.g., by means of phase ramps across the communication frames. Alternatively, the scheduler 107 may generate and/or may configure the UE 101 and/or the TX-AP 103 to generate said frequency shift by means of one or more frequency offsets, e.g., analog and/or physical frequency offsets, such that the resulting frequency shift is only a small fraction of the bandwidth, preferably less than 1%. For example, for a signal waveform bandwidth of 20 MHz, a frequency shift of 10 kHz may be defined, which may result in the fraction of 0.05%.

After performing channel estimation and by using the information regarding the time delay, the RX-AP 109 may generate range profiles from the radar pilot signal 104 and/or the multipath component 106 to derive the range-axis of the range-profiles, thereby performing range-domain channel separation.

Additionally or alternatively, the RX-AP 109 may perform Doppler-domain channel separation using the information regarding the frequency shift, especially by generating Doppler profiles from the radar pilot signal 104 and/or the multipath component 106 to derive the Doppler-axis of the Doppler-profiles. Alternatively, the RX-AP 109 may perform Doppler-domain channel separation using the information regarding the frequency shift by means of band-pass filtering in order to filter out the radar signals in the Doppler domain.

In this regard, the channel separation may imply that the complex valued taps may be at different delay (i.e., range) and Doppler bins because of the scheduling, whereby the RX-AP 109 may use the information regarding the time delay and/or frequency shift to separate the respective channels.

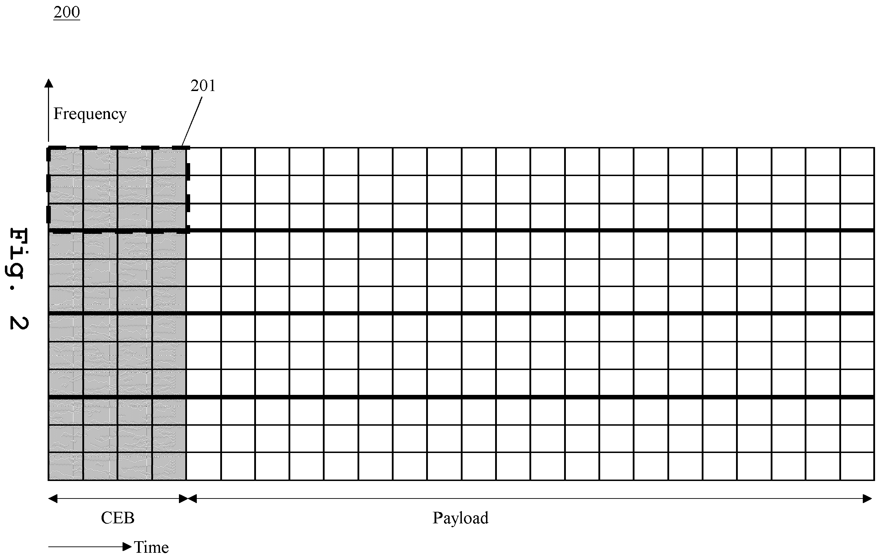

In Fig. 2, a time-frequency layout of an exemplary orthogonal frequency-division multiplexing (OFDM) system 200 is illustrated. For example, the UE 101 and the TX-AP 103 may use OFDM waveforms. Particularly, Fig. 2 shows the time-frequency distribution of the subcarriers over several OFDM symbols. Each small square may correspond to a subcarrier or a resource element of the OFDM system 200.

The OFDM system 200 may comprise the channel estimation block (CEB), the payload block, and the coherence block. The horizontal axis denotes the symbols (time) and the vertical axis denotes the subcarriers (frequency). For example, the block 201 in the channel estimation block may correspond to 3 subcarriers and 4 symbols, i.e., 12 resource elements or 12 orthogonal pilot sequences.

In this regard, a pilot sequence may be a sequence of complex numbers representing a code that may be spread in time or frequency, especially to aid channel estimation. In particular, the channels of one or more UEs 101 can be estimated simultaneously from each pilot sequence that was transmitted simultaneously. Advantageously, the pilot sequences may be constructed to be orthogonal with respect to each other.

In the following, the channel estimate is defined as being an estimate of the communication channel in the frequency domain. In particular, the channel estimate may be defined as an estimated complex valued number that may represent the amplitude scaling and phase shift that may distort the transmitted signal at a particular frequency and time instance. The channel may include the combination of TX hardware, RX hardware, propagation channel, signal processing, antennas, filters, etc.

For example, the coherence block may consist of the channel estimation block and the payload block. It may represent an area in the time-frequency domain where the channel may be approximately constant. Hence, over a coherence block, a single number may be enough to represent the channel for each UE 101 and the TX-AP 103 (excluding the tracking and compensation of short-term time variations, such as e.g., Doppler shifts).

Furthermore, in the channel estimation block, the subcarriers at the RX-AP 109 may be used to estimate the channels of the UE 101 and the TX-AP 103 in the uplink by exploiting the channel reciprocity. The UE 101 and/or the TX-AP 103 may perform said exploit by spreading a code sequence over the subcarriers/resource elements in that channel estimation block. This may allow for channel estimation by code division multiple access at the RX-AP 109.

Additionally or alternatively, the subcarriers may be spread in time and frequency. This can be seen as a special case of code division multiple access, since some elements of the codes can be set to zero at some subcarriers and non-zero at others. Thus, code division may also be accounted for time and frequency division multiple access.

Moreover, especially during the payload block, either the UE 101 may transmit the data and the TX-AP 103 may be silent, or the RX-AP 109 may be reconfigured to transmission and may serve the UE 101. The former may be referred to the uplink payload segment and the latter to the downlink payload segment.

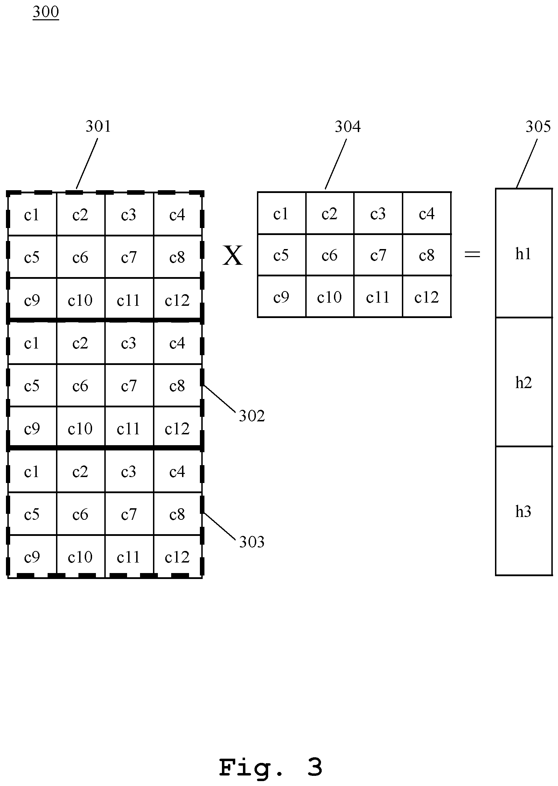

In Fig. 3, an exemplary received channel estimation scheme 300 is illustrated, especially by despreading pilot sequences. In particular, Fig. 3 shows the channel estimation for three channel estimation blocks 301, 302, 303, which may correspond to the channel estimation block of Fig. 2 such as the block 201. The channel estimation scheme 300 may comprise elementwise multiplication of the channel estimation blocks 301, 302, 303 with a conjugate code 304 and a further summation, which may result in the channel estimates 305.

For example, for a given UE 101 or TX-AP 103, the channel estimation may be done by multiplying each subcarrier with the corresponding complex conjugate of the code allocated to that UE 101 or TX-AP 103. After the elementwise multiplication, the subcarriers may be averaged, and the corresponding channel may be recovered.

As can be seen in this example, a single channel coefficient h1, h2, and h3 may be obtained per block 301, 302, and 303, respectively. For example, the RX-AP 109 may use the estimates with respect to the UE 101 for equalizing the payloads, and may use the estimates with respect to the TX-AP 103 for radar localization.

For instance, based on the channel estimates with respect to the TX-AP 103, the RX-AP 109 may perform radar processing to detect and to estimate the location of IO 105 in the environment. In this regard, the RX-AP 109 may coherently process several channel estimates with respect to the TX-AP 103 from several consecutive TDD frames.

For example, the RX-AP 109 may generate range profiles or delay profile or channel impulse response from the channel estimates with respect to the TX-AP 103. Afterwards, the RX-AP 109 may coherently combine several range profiles obtained from several TDD frames to generate a range-Doppler map or range-velocity map, delay-Doppler map, and delay-velocity map. The range and Doppler processing may be implemented using, for instance, a two-dimensional fast Fourier transform.

With respect to the term "range", the term can be understood as a monostatic range, which may refer to the case when the TX-AP 103 and the RX-AP 109 are collocated, especially on the same antenna system. The term may also be understood as a bistatic range, which may refer to the case when the TX-AP 103 and the RX-AP 109 are widely distributed, for instance, spaced some meters from each other.

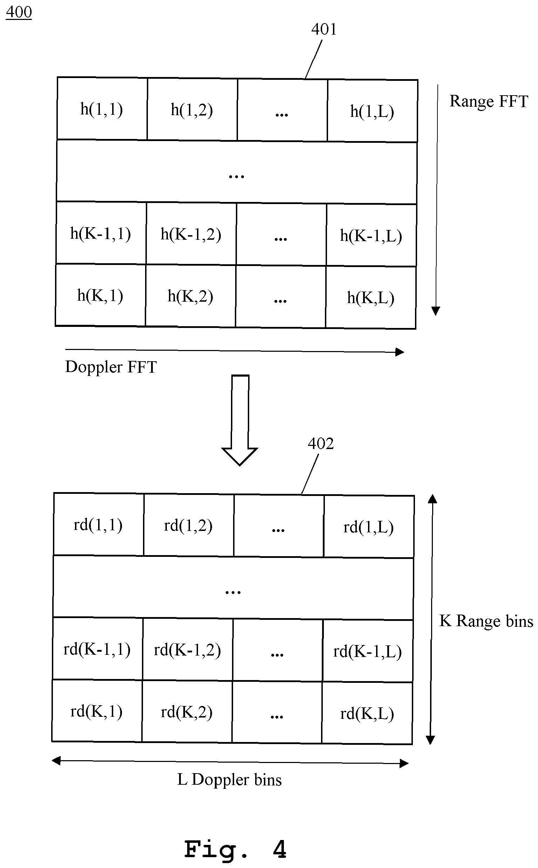

In Fig. 4, an exemplary range-Doppler processing 400 is illustrated, especially based on the channel estimates of Fig. 3. In particular, Fig. 4 shows a range-Doppler map generation scheme, e.g., performed by the RX-AP 109, where the range-Doppler maps may be formed from a set of L channel estimates, such as the set 401, each consisting of K channel coefficients estimated from K channel estimation blocks.

In this regard, the RX-AP 109 may perform a fast Fourier transform (FFT) across the channel estimates, which may also be referred as the range FFT since it generates a set of range profiles. Afterwards, the RX-AP 109 may perform a FFT across the L TDD frames, thereby generating a set of Doppler profiles. The combined image may result in a range-Doppler map 402, especially consisting of K range bins and L Doppler bins.

Additionally, for multiple RX-APs 109 and especially by combining range-Doppler maps 402 from several RX-APs 109, range-Doppler-direction of arrival maps can be generated. Similarly, for multiple TX-APs 103 and especially by combining range-Doppler maps 402 from several TX-APs 103, range-Doppler-direction of departure maps can be generated. Furthermore, especially in MIMO systems, range-Doppler-direction of departure-direction of arrival maps can also be constructed based on the range-Doppler processing 400 illustrated herein.

It is to be noted that the TX-AP 103 and the RX-AP 109 can be assumed synchronized in time and frequency, e.g., in the same MIMO system. The TX-AP 103 and the RX-AP 109 can also be assumed calibrated and having known relative locations and orientations. Furthermore, the TX-AP 103 and the RX-AP 109 can also be assumed stationary.

However, the UE 101 may be either stationary or mobile and/or cannot be assumed synchronized since the UE 101 may not be connected to the RX-AP 109 in the same way as the TX-AP 103. Therefore, radar processing based on the TX-AP 103 may result in a higher accuracy and may be capable of yielding a high quality detection and location estimation performance, in contrast to the UE channels.

It is further to be noted that, especially in the uplink pilot-based channel estimation, the RX-AP 109 may recover the radar echoes in the TX-AP 103 channels from the UE interference originating from the UE channels. As such, the weak radar signals may be originated from receiving echoes or multipath components 106 generated by the IO 105, which may be situated far away from the TX-AP 103. However, the strong interference may originate from the direct path and line of sight components from the UE 101, which may be situated in a possibly close vicinity to the RX-AP 109.

Furthermore, examples of hardware impairments may include oscillator frequency offsets and amplifier non-linearities. Moreover, examples of channel impairments may include Doppler shifts and propagation delays. When present, these impairments may distort the pilot sequences during transmission, channel propagation and reception. The RX-AP 109 may therefore receive distorted replicas of the pilot sequences that may differ from the assumed transmitted sequence. This may break the orthogonality between the pilot sequences.

For example, if a pilot sequence $y = [y_1 y_2 ... y_K]$ may be transmitted and the impairments may be given by $h = [h_1 h_2 ... h_K]$, then the received pilot sequence may be given by $\tilde{y} = [h_1 y_1, h_2 y_2, ..., h_K y_K]$. Considering $x = [x_1 x_2 ... x_K]$ be another sequence that may be constructed to be orthogonal to $y$ so that $\sum_{i=1}^{K} x_i^* y_i = 0$. This may correspond to the pilot sequences transmitted from the TX-AP 103 ($x$) and the UE 101 ($y$).

The RX-AP 109 may match the received signal with said sequence $x$. However, because $\tilde{y}$ may be received instead of $y$, the matching may produce the output $\sum_{i=1}^{K} x_i^* y_i h_i$, which may not be zero in general. This non-zero number may represent an interference that may be stronger than the weak radar echoes and may manifest itself as false detections in the radar processor.

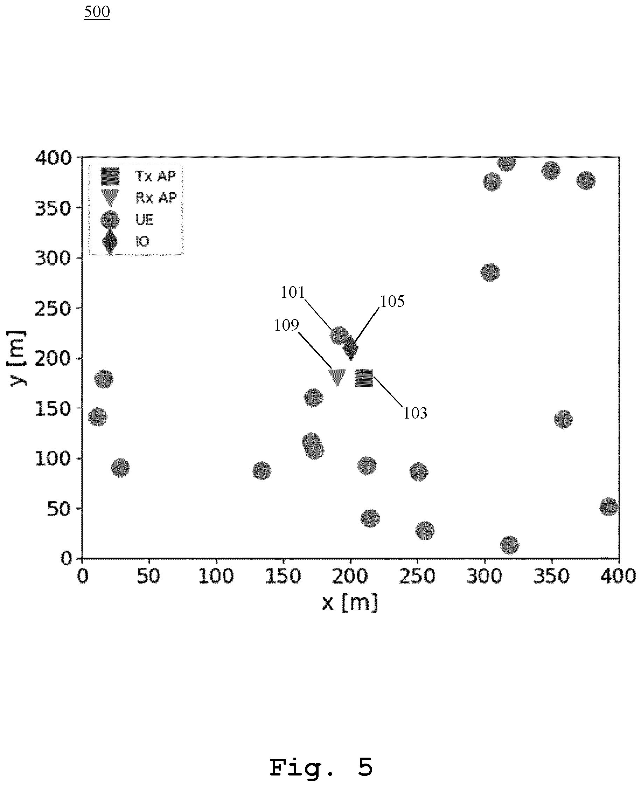

In Fig. 5, an exemplary scenario 500 for the joint communication and radar sensing is illustrated. For the scenario 500, a 5G-NR compliant OFDM waveform operating at 24 GHz with 3300 subcarriers spaced at 60 kHz is considered. The symbol duration is 16.8 microseconds, and the cyclic prefix duration is set to 1.16 microseconds. Channel estimation is carried out every 0.5 ms, corresponding to 28 symbols.

The 0.5 ms coherence time may support UE velocities of up to 40 km/h, corresponding to a maximum unambiguous bistatic velocity of +/- 0km/h. In total, 96 channel estimates, or TDD frames, are used in a radar frame, giving an integration time of 48 ms. The bistatic velocity resolution becomes 0.6 km/h and the bistatic range resolution becomes 1.5 m.

Furthermore, for the scenario 500, a coherence bandwidth of 0.72 MHz is used in order to keep the radar unambiguous in range, which corresponds to 12 subcarriers and supports a delay spread of up to 208 m or a maximum unambiguous bistatic range of 416 m. In total, 275 channel estimation blocks can be achieved. Moreover, two OFDM symbols are used for channel estimation, giving a total of 24 subcarriers for channel estimation, and a pilot overhead of 24 / (12*28) = 7%.

In other words, the TDD frame comprises, especially per 0.5 ms TDD frame, 28 symbols and 12 subcarriers in a coherence block, which corresponds to 12*28 subcarriers per coherence block. For channel estimation, a total of 24 subcarriers are used, i.e., two symbols each with 12 subcarriers. This corresponds to the total overhead of 24 / (12*28) = 7%.

Moreover, for the scenario 500, a total of 20 UEs 101, one TX-AP 103, one RX-AP 109, and one IO 105 are provided. The UEs 101 and the TX-AP 103 may transmit at the same time by using orthogonal pilot sequences. Furthermore, the UEs 101 are set to be synchronized in time with an error of up to 0.2 microsecond and in frequency with a clock accuracy of 0.1 ppm.

As such, the object of the RX-AP 109 is to estimate the (bistatic) distance to the IO 105 from the channel estimate originating from the TX-AP 103, under the influence of the UE interference. The channels are estimated by direct de-spreading, as exemplified in Fig. 3 before.

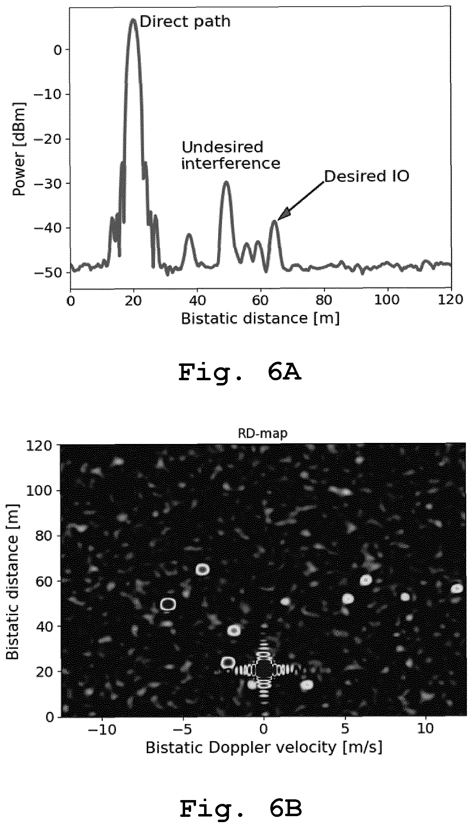

In Fig. 6A, an exemplary range-profile corresponding to the scenario of Fig. 5 is illustrated. In particular, Fig. 6A shows the average range-profiles across the 96 TDD frames in decibel scale under the influence of the UE interference.

For example, when the UEs 101 are mobile, the Doppler shift may distort their respective pilot sequences. The same may hold for frequency offsets. In the scenario 500, the UEs 101 have been set to move with a uniform random velocity of up to (+/- 5, +/- 5) meters per second in the x and y direction. Furthermore, delay spreads and timing errors may cause the channel to vary in the frequency domain. Since it is assumed that the channel is constant, this may also break the orthogonality between the pilot sequences.

As can be seen in Fig. 6A, many false detections arise, originating from the UE interference. The strong peak at approximately 20 m corresponds to the direct path between the TX-AP 103 and the RX-AP 109 and the desired IO peak at approximately 65 m corresponds to the IO 105. However, the interference (e.g., the undesired interference at approximately 50 m) is stronger than the weak echo from the IO 105 at approximately 65 m, which may make detection difficult at a low false alarm rate.

In Fig. 6B, an exemplary range-Doppler map corresponding to the range-profile of Fig. 6A is illustrated. The strong peak at approximately 20 m along the bistatic distance corresponds to the direct path between the TX-AP 103 and the RX-AP 109 and the desired IO peak at approximately 65 m along the bistatic distance corresponds to the IO 105. However, due to the large number of false detections present, the echo originating from the IO 105 is difficult to distinguish.

Generally, the interference may originate from the line-of-sight components of the UEs 101. The power of these signals, especially before channel estimation, may be in the same order of magnitude as the line-of-sight component of the TX-AP 103. Under ideal conditions, the pilot of the TX-AP 103 is perfectly orthogonal to the pilots of UE 101, and hence cancels out perfectly, as previously demonstrated.

However, when channel distortions are present, the orthogonality may be lost and may be limited in the range of 30-60 dB in this example, depending on the Doppler shift, delay spread and timing/frequency offsets. This level of orthogonality may not be enough to ensure good radar performance, and may result in a severely degraded detection performance, since the detection threshold should be raised accordingly.

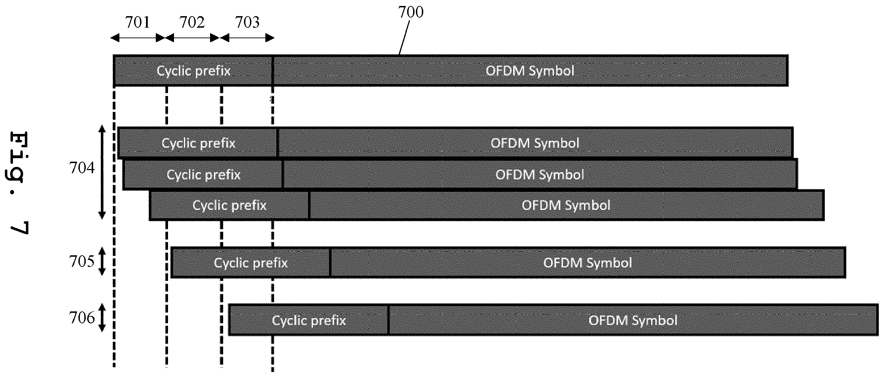

In Fig. 7, exemplary OFDM symbols 700 with a cyclic prefix are illustrated according to an aspect of the invention, especially with the timing reference from the receiver point of view. In order to mitigate the UE interference, the scheduler 107 may schedule the UE 101 and/or the TX-AP 103 to synchronize in time so that they may arrive at the RX-AP 109 within assigned slots at the cyclic prefix of the used waveform, e.g., the OFDM waveform illustrated herein.

In this regard, the scheduler 107 may configure the OFDM waveform 700, especially by splitting the cyclic prefix into one or more time slots 701, 702, 703, and may generate the time delay or may configure the UE 101 and/or the TX-AP 103 to transmit the pilot signals with the time delay based on the time slots 701, 702, 703 in the cyclic prefix, especially with a timing reference from the RX-AP 109 point of view.

Due to the time synchronization, the UE 101 signals, e.g., the UE OFDM symbols 704, and the TX-AP 103 signals, e.g., the TX-AP OFDM symbol 705 of a first TX-AP and the TX-AP OFDM symbol 706 of a second TX-AP, may arrive within assigned slots of the cyclic prefix at the RX-AP 109. By arriving within different slots at the cyclic prefix, the TX-AP and UE channels may become orthogonal in the delay/range domain. The OFDM symbols may significantly overlap (e.g., for analog delays as shown herein) or may entirely overlap (e.g., for digital modulation) at the RX-AP 109.

For example, the scheduler 107 may configure the OFDM waveform 700 with the timing reference from the RX-AP 109 point of view, especially by splitting the cyclic prefix into one or more time slots 701, 702, 703, and may provide or assign the transmitting units, e.g., the UE 101 and/or the TX-AP 103, a respective slot 701, 702, 703 by means of the time delay.

As such, the transmitted symbols along with the multipath components may arrive at the RX-AP 109 within the assigned slot 701, 702, 703. The slots 701, 702, 703 may be assigned to be sufficiently large in order to cover the most significant multipath components, and to be sufficiently large so that the multipath components in the range/delay-domain located between two slots can be resolved.

In the context of OFDM systems, the timing adjustment can be set to establish range-domain orthogonality between the TX-AP 103 and the UE 101, while still having the channels still accommodating the cyclic prefix duration. This may allow for immediate channel estimation and low complexity one-tap equalization without any modifications to the communication system, while also allowing the UE interference to be mitigated from the radar channel. If the cyclic prefix duration is too short, then a cyclic prefix extension may be implemented. Alternatively, the subcarrier spacing can be reduced at the cost of radar range resolution.

It is to be noted that the above-mentioned time synchronization may not require radar-grade synchronization performance at the UE 101, but rather only a coarse synchronization accuracy that is sufficient to separate the UE channels from the TX-AP channels.

As an example, a timing accuracy of 0.1 microsecond may correspond to 30 meters. If the timing adjustment may be set to 0.67 microseconds, or 200 meters, then the timing adjustment may have an accuracy of 0.57 to 0.77 microseconds, or 170-230 meters. While this level of synchronization may not be sufficient for radar processing, it may be sufficient for establishing range-domain orthogonality between the UE channels and TX-AP channels.

It is further to be noted that, the above-mentioned time synchronization can be implemented for any prefixed waveform, as long as the bandwidth is sufficiently large with respect to the symbol duration so that the respective channels can be separated in the delay/range-domain. A waveform with a cyclic prefix may be advantageous since it may provide significant computational gains for both the communication and radar system. However, the above-mentioned time synchronization can be implemented for any prefix, including a zero prefix.

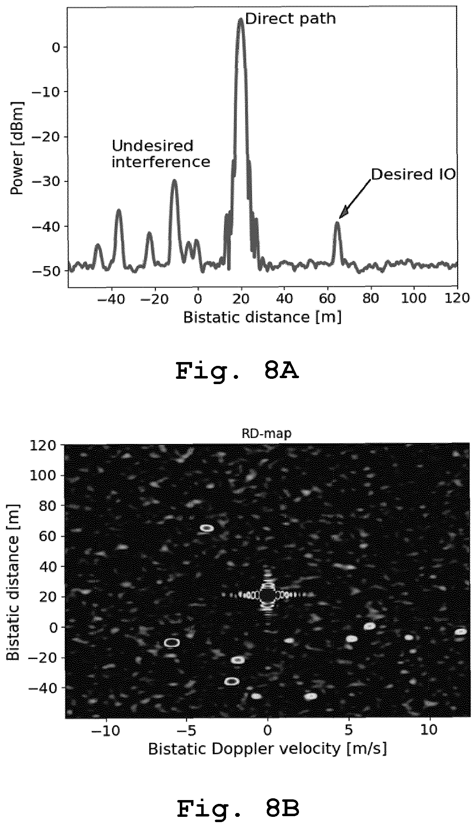

In Fig. 8A, an exemplary range-profile corresponding to the scenario of Fig. 5 is illustrated, where the OFDM system of Fig. 7 is implemented. In particular, the cyclic prefix of the OFDM symbol 700 is split into two slots or portions. The first slot or portion spans the first 0.2 microseconds corresponding to 60 meters, and the second slot or portion spans from 0.2 microseconds to the end of the cyclic prefix.

For example, the scheduler 107 may schedule the UEs 101 to synchronize within the first cyclic prefix slot or segment, and may schedule the TX-AP 103 to transmit within the second cyclic prefix slot or segment. The scheduler 107 may also provide the information, i.e., the delay in transmission of the UEs 101 and TX-AP 103, to the RX-AP 109.

Accordingly, the RX-AP 109 may shift the range-axis so that positive distances may start at the second cyclic prefix slot or segment and the negative distances may correspond to the first cyclic prefix slot or segment. This may allow for an immediate discrimination of desired IOs from undesired UE interference as shown in Fig. 8A. It can be seen that the UE interference is still present, however, in the outside of the region of interest at the distances -60 to 0 meters. As such, the desired IO at approximately 65 meters can be detected at low complexity without any loss in performance.

In Fig. 8B, an exemplary range-Doppler map corresponding to the range-profile of Fig. 8A is illustrated. The strong peak at approximately 20 m along the bistatic distance corresponds to the direct path between the TX-AP 103 and the RX-AP 109 and the desired IO peak at approximately 65 m along the bistatic distance corresponds to the IO 105. It can further be seen that the false detections originated by UE interference are shifted to the negative distance between -60 to 0 meters along the bistatic distance.

It is to be noted that, depending on the total delay spread and time synchronization accuracy, the system 100, especially the scheduler 107, may allocate larger slots of the cyclic prefix for the UEs 101 and TX-APs 103. Under such circumstances, the default prefix duration may be too short to accommodate all functionalities, and a cyclic prefix extension may be performed, which may increase the system overhead.

For instance, a default 7% cyclic prefix duration may correspond to 1.16 microseconds and the useful part of the OFDM symbol duration may correspond to 16.67 microseconds. If the duration of the cyclic prefix is extended, e.g. doubled, an approximate 7% overhead may be introduced during the channel estimation segment. However, in the above-mentioned scenario, only 2 out of 28 symbols are used for channel estimation, the total overhead becomes 0.07 * 2 / 28 = 0.005 = 0.5 %, which is negligible in many scenarios.

Therefore, even if the duration of the cyclic prefix may be extended, the invention facilitates a low-complexity procedure for radar detection under the influence of strong UE channel interference in the uplink training segment of a TDD frame. At the same time, the communication performance is not compromised as long as the cyclic prefix duration is respected.

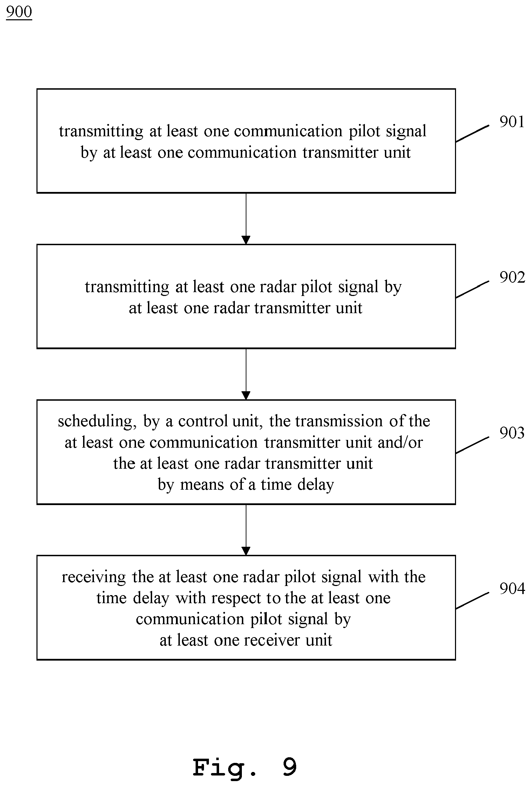

In Fig. 9, an exemplary embodiment of the method 900 according to the second aspect of the invention is illustrated. In a first step 901, at least one communication pilot signal is transmitted by at least one communication transmitter unit. In a second step 902, at least one radar pilot signal is transmitted by at least one radar transmitter unit.

In a third step 903, the transmission of the at least one communication transmitter unit and/or the at least one radar transmitter unit is scheduled by a control unit by means of a time delay. In a fourth step 904, the at least one communication pilot signal and the at least one radar pilot signal are received by at least one receiver unit, whereby the at least one radar pilot signal is received with the time delay with respect to the at least one communication pilot signal.

The problem of UE interference may not be limited to code division multiple access, since there may still be UE interference present even when the subcarriers are made orthogonal by time or frequency division. For instance, the interference may originate from UEs 101 sharing the same subcarrier as the TX-AP 103 and may be located far away to be negligible for the communication system, however still severely impacting the radar system due to the high system sensitivity.

This kind of interference, where the same pilot sequence (e.g., single subcarrier) may be shared, is referred to as pilot contamination. Hence, the invention also relates to both code division, time division and frequency division in the uplink channel estimation protocols supported in, for instance, the 5G-NR standard.

Furthermore, especially depending on the pilot allocation and transmission structure, the UE interference may be decorrelated by, for instance, randomizing the pilot sequences in time and frequency. This may have the effect of spreading out the power of the spurious peaks, which may make the UE interference enter the receiver as added noise instead of ghost targets.

It is important to note that, in the claims as well as in the description, the word "comprising" does not exclude other elements or steps and the indefinite article "a" or "an" does not exclude a plurality. A single element or other unit may fulfill the functions of several entities or items recited in the claims. Furthermore, the word "coupled" implies that the elements may be directly connected together or may be coupled through one or more intervening elements. Moreover, the description with regard to any of the aspects is also relevant with regard to the other aspects of the invention.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A system (100) for joint communication and radar sensing comprising:

   at least one communication transmitter unit (101) configured to transmit at least one communication pilot signal (102),
   at least one radar transmitter unit (103) configured to transmit at least one radar pilot signal (104),
   a control unit (107) configured to schedule the transmission of the at least one communication transmitter unit (101) and/or the at least one radar transmitter unit (103) by means of a time delay, and
   at least one receiver unit (109) configured to receive the at least one radar pilot signal (104) with the time delay with respect to the at least one communication pilot signal (102).

2. The system according to claim 1,

   wherein the control unit (107) is further configured to generate a frequency shift for the at least one communication transmitter unit (101) and/or the at least one radar transmitter unit (103), and
   wherein the at least one receiver unit (109) is further configured to receive the at least one radar pilot signal (104) with the frequency shift with respect to the at least one communication pilot signal (102).

3. The system according to claim 1 or 2,

wherein the control unit (107) is configured to transmit the time delay and/or the frequency shift to the at least one receiver unit (109) prior to the reception of the at least one communication pilot signal (102) and the at least one radar pilot signal (104), whereby the at least one receiver unit (109) is configured to perform channel estimation based on the time delay and/or the frequency shift in order to separate communication and radar sensing channels.

4. The system according to any of claims 1 to 3, wherein the control unit (107) is configured to generate the time delay by means of a digital pilot modulation, or wherein the control unit (107) is configured to generate the time delay by one or more time delay units.

5. The system according to any of claims 1 to 4,

   wherein the control unit (107) is configured to generate the frequency shift by means of a digital pilot modulation, or
   wherein the control unit (107) is configured to generate the frequency shift by one or more frequency offsets.

6. The system according to any of claims 1 to 5, wherein the at least one communication pilot signal (102) and/or the at least one radar pilot signal (104) correspond to a waveform (700) with a prefix, preferably a cyclic prefix.

7. The system according to claim 6, wherein the control unit (107) is configured to generate the time delay corresponding to a predefined time range (701, 702, 703) within the waveform prefix.

8. The system according to any of claims 1 to 7,

   wherein the at least one receiver unit (109) is configured to perform the channel estimation in range-domain based on the time delay, and/or
   wherein the at least one receiver unit (109) is configured to perform the channel estimation in Doppler-domain based on the frequency shift.

9. A method (900) for joint communication and radar sensing comprising:

   transmitting (901) at least one communication pilot signal (102) by at least one communication transmitter unit (101),
   transmitting (902) at least one radar pilot signal (104) by at least one radar transmitter unit (103),
   scheduling (903), by a control unit (107), the transmission of the at least one communication transmitter unit (101) and/or the at least one radar transmitter unit (103) by means of a time delay, and
receiving (904) the at least one radar pilot signal (104) with the time delay with respect to the at least one communication pilot signal (102) by at least one receiver unit (109) .

10. The method according to claim 9,
wherein the method further comprises:

   generating, by the control unit (107), a frequency shift for the at least one communication transmitter unit (101) and/or the at least one radar transmitter unit (103), and
   receiving the at least one radar pilot signal (104) with the frequency shift with respect to the at least one communication pilot signal (102) by the at least one receiver unit (109).

11. The method according to claim 9 or 10,
wherein the method further comprises:

   transmitting the time delay and/or the frequency shift by the control unit (107) to the at least one receiver unit (109) prior to the reception of the at least one communication pilot signal (102) and the at least one radar pilot signal (104), and
   performing channel estimation by the at least one receiver unit (109) based on the time delay and/or the frequency shift in order to separate communication and radar sensing channels.

12. The method according to any of claims 9 to 11,
wherein the method further comprises:

   generating the time delay by the control unit (107) using a digital pilot modulation, or
   generating the time delay by the control unit (107) using one or more time delay units.

13. The method according to any of claims 9 to 12,
wherein the method further comprises:

   generating the frequency shift by the control unit (107) using a digital pilot modulation, or
   generating the frequency shift by the control unit (107) using one or more frequency offsets.

14. The method according to any of claims 9 to 13,
wherein the method further comprises:

   providing a waveform (700) with a prefix, preferably a cyclic prefix, as the at least one communication pilot signal (102) and/or the at least one radar pilot signal (104), and
   generating the time delay by the control unit (107) corresponding to a predefined time range (701, 702, 703) within the waveform prefix.

15. The method according to any of claims 9 to 14,
wherein the method further comprises:

   performing the channel estimation in range-domain by the at least one receiver unit (109) based on the time delay, and/or
   performing the channel estimation in Doppler-domain by the at least one receiver unit (109) based on the frequency shift.

100

Fig. 1

Fig. 2

300

301                                            304                            305

| c1 | c2 | c3 | c4 |
|----|----|----|----|
| c5 | c6 | c7 | c8 |
| c9 | c10 | c11 | c12 |
| c1 | c2 | c3 | c4 |
| c5 | c6 | c7 | c8 |
| c9 | c10 | c11 | c12 |
| c1 | c2 | c3 | c4 |
| c5 | c6 | c7 | c8 |
| c9 | c10 | c11 | c12 |

X

| c1 | c2 | c3 | c4 |
|----|----|----|----|
| c5 | c6 | c7 | c8 |
| c9 | c10 | c11 | c12 |

=

| h1 |
|----|
| h2 |
| h3 |

302

303

Fig. 3

400

401

| h(1,1) | h(1,2) | ... | h(1,L) |
|--------|--------|-----|--------|
| ... | | | |
| h(K-1,1) | h(K-1,2) | ... | h(K-1,L) |
| h(K,1) | h(K,2) | ... | h(K,L) |

Range FFT

Doppler FFT

402

| rd(1,1) | rd(1,2) | ... | rd(1,L) |
|---------|---------|-----|---------|
| ... | | | |
| rd(K-1,1) | rd(K-1,2) | ... | rd(K-1,L) |
| rd(K,1) | rd(K,2) | ... | rd(K,L) |

K Range bins

L Doppler bins

**Fig. 4**

500

Fig. 5

Fig. 6A

Fig. 6B

Fig. 7

Fig. 8A

Fig. 8B

900

```
┌─────────────────────────────────────────────┐
│                                               │
│   transmitting at least one communication     │──── 901
│     pilot signal by at least one              │
│     communication transmitter unit            │
│                                               │
└─────────────────────────────────────────────┘
                      │
                      ▼
┌─────────────────────────────────────────────┐
│                                               │
│   transmitting at least one radar pilot       │──── 902
│     signal by at least one radar              │
│     transmitter unit                          │
│                                               │
└─────────────────────────────────────────────┘
                      │
                      ▼
┌─────────────────────────────────────────────┐
│                                               │
│   scheduling, by a control unit, the          │
│   transmission of the at least one            │──── 903
│   communication transmitter unit and/or       │
│   the at least one radar transmitter unit     │
│   by means of a time delay                    │
│                                               │
└─────────────────────────────────────────────┘
                      │
                      ▼
┌─────────────────────────────────────────────┐
│                                               │
│   receiving the at least one radar pilot      │
│   signal with the time delay with respect     │──── 904
│   to the at least one communication pilot     │
│   signal by at least one receiver unit        │
│                                               │
└─────────────────────────────────────────────┘
```

Fig. 9

Europäisches
Patentamt

European
Patent Office

Office européen
des brevets

## EUROPEAN SEARCH REPORT

Application Number

EP 22 21 2149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/072963 A1 (YU ZHIBIN [DE] ET AL) 5 March 2020 (2020-03-05) * paragraphs [0001], [0016], [0020], [0043], [0059], [0034]; figures 1, 2, 4, 9 * | 1-15 | INV. G01S7/02 G01S7/00 G01S13/00 H04W28/00 H04L5/00 |
| A | WO 2021/253307 A1 (QUALCOMM INC [US]; LI QIAOYU [CN] ET AL.) 23 December 2021 (2021-12-23) * paragraph [0077] * | 3,11 | ADD. G01S13/28 G01S7/292 |
| A | WO 2022/198349 A1 (HUAWEI TECH CO LTD [CN]) 29 September 2022 (2022-09-29) * figure 19 * | 7,14 | |

TECHNICAL FIELDS
SEARCHED      (IPC)

G01S
H04L
H04W

The present search report has been drawn up for all claims

| Place of search | Date of completion of the search | Examiner |
|---|---|---|
| Munich | 28 April 2023 | Ferrara, Michele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 2149

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2023

| Patent document cited in search report | | Publication date | Patent family member(s) | | Publication date |
|---|---|---|---|---|---|
| US 2020072963 | A1 | 05-03-2020 | CN 110352363 | A | 18-10-2019 |
| | | | DE 112017007364 | T5 | 05-12-2019 |
| | | | US 2020072963 | A1 | 05-03-2020 |
| | | | WO 2018182723 | A1 | 04-10-2018 |
| WO 2021253307 | A1 | 23-12-2021 | NONE | | |
| WO 2022198349 | A1 | 29-09-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022188979 A1